Europäisches Patentamt

European Patent Office

Office européen des brevets

(11) Publication number: **0 061 914**
**B1**

# EUROPEAN PATENT SPECIFICATION

(45) Date of publication of patent specification: 02.01.85

(51) Int. Cl.⁴: **A 23 L 1/315**

(21) Application number: **82301611.8**

(22) Date of filing: **26.03.82**

(54) Treatment of poultry carcasses.

(30) Priority: **27.03.81 GB 8109724**

(43) Date of publication of application:
**06.10.82 Bulletin 82/40**

(45) Publication of the grant of the patent:
**02.01.85 Bulletin 85/01**

(84) Designated Contracting States:
**AT BE CH DE FR GB IT LI LU NL SE**

(56) References cited:
**EP-A-0 031 630**
**DE-A-2 023 529**
**FR-A-2 089 951**
**US-A-3 573 063**

**FOOD SCIENCE AND TECHNOLOGY**
**ABSTRACTS, July 1978, abstract no.78034649,**
**V. ADYLOV: "Composition for injecting meat".**

(73) Proprietor: **TWYDALE TURKEYS LIMITED**
**Wansford Road**
**Driffield North Humberside YO25 7NJ (GB)**

(72) Inventor: **Clancy, John**
**The Hollies North Dalton**
**Driffield Yorkshire (GB)**

(74) Representative: **Lynd, Michael Arthur et al**
**STANLEY, POPPLEWELL, POOLE 57 Lincoln's**
**Inn Fields**
**London WC2A 3LS (GB)**

Courier Press, Leamington Spa, England.

## Description

The present invention relates to the treatment of poultry carcasses to enhance properties such as succulence, flavour and tenderness and/or to improve surface browning.

There is known a process in which fat is injected into a raw dressed poultry carcass so that during cooking, the fat will melt and exude onto the skin thus to baste it. It is therefore necessary when injecting the carcass to heat the fat to melt it; the temperature of the injected carcass is thus caused to rise and hence a greater quantity of heat has to be removed from the carcass in a subsequent step of freezing the carcass for preservation and storage.

According to a first aspect of the present invention there is provided a method of treating poultry carcass meat characterised in that it comprises injecting into the meat an aqueous liquid containing whole milk constituents.

The presence of the aqueous liquid of the present invention increases the succulency of the bird when cooked and enhances its flavour. The milk constituents in the liquid are believed to assist in lightening the colour of the poultry meat which is particularly advantageous in respect of breast meat and additionally imparts a pleasant "creamy" flavour to the bird.

It is thought unlikely that any fat contained in the aqueous liquid has an appreciable basting action upon the skin of the bird.

The milk constituents may actually be milk the composition of which may have been altered e.g. by reducing the fat or cream content, or may be derived from a dried or concentrated milk or skimmed milk.

Preferably the solution is made up from powdered or granulated milk. Powdered or granulated milk is preferred over liquid milk because it is easier to maintain hygienic and sterile conditions during use and storage.

Very preferably the liquid is composed of water in which has been dissolved salt and powdered or granulated skimmed milk. The salt acts as a flavour enhancer.

It is also preferred that the liquid contain a quantity of honey. When honey is present and the injected liquid is allowed to exude out onto the skin of the bird during cooking the honey has been found to promote browning of the skin of the bird, possibly by the dextrose therein being caramelised during cooking. The honey also imparts a pleasant flavour to the bird.

The powdered or granulated milk may be present in the liquid in an amount of from about 12 to about 25 parts per 100 parts of water, the salt may be present in an amount of up to about 10 parts per 100 parts of water and the honey, if present, may be in an amount of up to about 5 parts per 100 parts of water.

It has been found preferable that the liquid be injected in an amount of from 1% to 10% by the weight of the carcass meat.

The liquid most preferably comprises per 100 parts by weight of water, 20 parts by weight of skimmed milk powder, 5 parts by weight of salt and approximately $\frac{1}{2}$ part by weight (i.e. $\frac{1}{2}$ oz in 1 gallon of water which is equivalent to 14.2 g in 4.6 l of water) of honey.

In an important modification of the invention the aqueous liquid is cooled, preferably to near its freezing point, before injection into the carcass whereby the carcass is chilled by the injection liquid, thus facilitating a subsequent freezing step. Moreover the use of a low temperature injection medium reduces the possibility of bacterial growth and contamination.

The presence of the aqueous liquid of the present invention increases the succulency of the bird when cooked and enhances its flavour.

According to a further aspect of the present invention there is provided poultry carcass meat which has been injected with an aqueous liquid containing salt and whole milk constituents.

The present invention further provides an aqueous liquid for injection into poulty carcass meat which liquid contains whole milk constituents, salt and honey.

The liquid may also contain one or more additives such as are commonly used in the art, such as conventional phosphate salts, permitted flavouring agents, permitted colouring agents, tenderizing agents, binders etc., as desired.

In a particular embodiment of the invention a dried skimmed milk powder is employed, the assay of which is as follows:—

| | |
|---|---|
| Lactose (carbohydrate) | 52% By weight |
| Protein | 36% By weight |
| Ash | 8% By weight |
| Moisture | 3.2% By weight |
| Fat | 0.8% By weight |
| Calorific value | 346 Cals/100 gms (1,45 KJ/100 g) |

This product is commercially available under the trade mark "MILQUIK".

The aqueous liquid is prepared by adding to tepid water in a stainless steel tank 5 parts by weight per 100 parts of water of pure vacuum salt and 1 part per 100 parts of water of honey. These constituents are dissolved therein by stirring. Skimmed milk powder is then dissolved in tap water until a mixture of a thick cream constituency is formed and this mixture is then mixed with the salt and honey solution in an amount of 17 parts of skimmed milk powder per 100 parts of water. After transferral to a stainless steel bulk storage tank the solution is cooled, with constant agitation, to a temperature less than 40°F (5°C).

A turkey carcass, which has been eviscerated, washed, cooled in ice water overnight to bring it to a temperature of from −18°C to +5°C (0° to 40°F) and drained, is then injected with the cooled aqueous liquid in an amount of 5% by weight of the carcass. The breast is injected from above using any suitable proprietary metering pump, e.g. an 'Autarky' pump preferably employing an inverted V-shaped plate provided with, on each of the lower most faces of the V, six injection needles, the location of which on the plate can be adjusted. Thus the entire breast can be injected in one operation. The thighs of the bird are injected with the liquid using a twin needle injection pump. Thereafter neck and giblets are sent into the cavity of the bird and the bird is then bagged, weighed, shrink-wrapped and frozen in a bath of calcium chloride solution at −29°C (−20°F).

The present invention thus provides an improved method of treating a poultry carcass in which a pleasant flavour can be imparted, in which browning of the exterior of the bird is promoted, in which a freezing step during processing of the carcass can be rendered more efficient and in which the risk of bacteriological contamination is reduced.

## Claims

1. A method of treating poultry carcass meat for roasting, characterised in that it comprises injecting into the meat an aqueous solution containing per 100 parts of water, more than 12 parts of substantially whole milk constituents and less than 10 parts of salt, the solution being injected in an amount of from 1 to 10% by weight of the carcass meat.

2. A method as claimed in claim 1, characterised in that the milk constituents comprise powdered or granulated milk.

3. A method as claimed in claim 1 or 2, characterised in that the solution includes honey.

4. A method as claimed in claim 1, 2 or 3, characterised in that the aqueous solution comprises per 100 parts of water, from about 12 to 25 parts of powdered or granulated milk and up to about 5 parts of honey if present.

5. A method as claimed in claim 4, characterised in that the aqueous solution comprises per 100 parts by weight of water, 20 parts by weight of skimmed milk powder, 5 parts by weight of salt, and $\frac{1}{2}$ part by weight of honey.

6. A method as claimed in any one of claims 1 to 5, characterised in that the solution is cooled to near its freezing point before injection into the carcass.

7. Poultry carcass meat which has been injected with a solution as defined in any one of the preceding claims.

8. A solution for injecting a poultry carcass, as defined in any one of claims 1 to 6.

## Revendications

1. Procédé de traitement de la viande de carcasse de volaille destinée à être rôtie, caractérisé en ce qu'il comprend l'injection dans la viande d'une solution aqueuse contenant pour 100 parties d'eau, plus de 12 parties d'à peu près l'ensemble des constituants du lait et moins de 10 parties de sel, la solution étant injectée suivant une quantité allant de 1 à 10 % en poids de la viande de carcasse.

2. Procédé suivant la revendication 1, caractérisé en ce que les constituents du lait comprenent du lait en granulés ou en poudre.

3. Procédé suivant la revendication 1 ou 2, caractérisé en ce que la solution comprend du miel.

4. Procédé suivant la revendication 1, 2 ou 3, caractérisé en ce que la solution aqueuse comprend pour 100 parties d'eau, de environ 12 à 25 parties de lait en poudre ou en granulés et, le cas échéant, jusqu'à environ 5 parties de miel.

5. Procédé suivant la revendication 4, caractérisé en ce que la solution aqueous comprend pour 100 parties en poids d'eau, 20 parties en poids de poudre de lait écrémé, 5 parties en poids de sel, et une demi partie en poids de miel.

6. Procédé suivant l'une quelconque des revendications 1 à 5, caractérisé en ce que la solution est refroidie jusqu'à environ son point de congélation avant l'injection dans la caracasse.

7. Viande de carcasse de volaille dans laquelle on a injecté une solution telle que définie suivant l'une quelconque des revendications précédentes.

8. Solution destinée à être injectée dans une carcasse de volaille, telle que définie suivant l'une quelconque des revendications 1 à 6.

## Patentansprüche

1 Verfahren für die Behandlung von zum Braten bestimmten Geflügelfleisch, dadurch gekennzeichnet, daß in das Fleisch eine wässrige Lösung injiziert wird, die auf 100 Teile Wasser mehr als 12 Teile von festen milchbestandteilen und weniger als 10 Teile Salz enthält, wobei die Lösung in einer Menge von 1 bis 10 Gewichtsprozent des Fleiches injiziert wird.

2. Verfahren nach Anspruch 1, dadurch gekennzeichnet, daß die Milchbestandteile Milchpulver oder granulierte Milch enthalten.

3. Verfahren nach Anspruch 1 oder 2, dadurch gekennzeichnet, daß die Lösung Honig enthält.

4. Verfahren nach einem der Ansprüche 1 bis 3, dadurch gekennzeichnet, daß die wässrige Lösung auf 100 Teile Wasser ca. 12 bis 25 Teile Milchpulver oder granulierte Milch und ggfs. bis zu 5 Teile Honig enthält.

5. Verfahren nach Anspruch 4, dadurch gekennzeichnet, daß die wässrige Lösung auf 100 Gewichtsteilen Wasser 20 Gewichtsteile entrahmtes Milchpulver, 5 Gewichtsteile Salz und $\frac{1}{2}$ Gewichsteil Honig enthält.

6. Verfahren nach einem der Ansprüche 1 bis 5, dadurch gekennzeichnet, daß die Lösung bis nahe zu ihrem Gefrierpunkt abgekühlt wird, bevor diese in das Fleisch injiziert wird.

7. Geflügelfleisch, das mit einer Lösung, wie sie in einem der vorhergehenden Ansprüche definiert ist, injiziert ist.

8. Lösung für das Injizieren von Geflügelfleisch, wie sie in einem der vorstehenden Ansprüche 1 bis 6 definiert ist.